# EUROPEAN PATENT APPLICATION

(11) **EP 1 992 307 A1**
(43) Date of publication of application: **19.11.2008**
(21) Application number: 08386007.2
(22) Date of filing: 15.05.2008
(51) Int. Cl.: A61C 17/00

(54) **Dental saliva ejection pump**

(30) Priority: 17.05.2007 GR 20070100297
(71) Applicant: Kasouras, Dimitrios, 30100 Agrinio (GR); Kasouras, Vasileios, 30100 Agrinio (GR)
(72) Inventor: Kasouras, Dimitrios, 30100 Agrinio (GR); Kasouras, Vasileios, 30100 Agrinio (GR)

(57) **Abstract**

The Dental Saliva Ejection Pump described in the present invention, is used for the aspiration and rejection of liquids from the patient's mouth, during dental, surgical or other, operations.

It consists of an electric pump (1), a liquids collection tank (2), a liquids discharge siphon (3), a lubricant oil container (4), cooling coil (5) for oil/air, oil flow control valve (6), oil flow limiter valve (7), oil flow visual inspection valve (8), suction limiter valve (9), liquids level valve (12), and liquids output valve (13).

By means of the pump (1) suction operation, the liquids are in-taken into the tank (2) and, depending on their level in the tank and the vacuum level created inside the tank, the output valve (13) opens, releasing the liquids to the drainage, without interrupting the aspiration process.

The said Dental Saliva Ejection Pump operates as a stand-alone device independent from the main dental deck and its operation is practically noiseless.

Its application is very simple and it can be produced using standard commercial components.

## Description

The present invention is referring to a Dental Saliva Ejection Pump, which is used for the intake and removal of any excess liquid, present in the patient's mouth, during dental, surgical or other, operations.

Saliva ejection pumps are usually embedded in the main dentist's deck and they operate either by compressed air provided by separate compressors, or by other external equipment, that are adapted to the main deck by specialized technicians. These pumps appear to have many weak points that prove to be inconvenient: They are prone to breakdowns, the compressor is noisy and consumes a lot of electrical power, and they require authorized personnel for their maintenance and repair.

The saliva ejection pump of the present invention has many features: It has small dimensions and operates independently from the main dentist's deck, with low power consumption and operating noise, negligible lubricant oil consumption, very simple operation and maintenance functions, without critical points of extreme fatigue, which results in long term reliability.

It consists of a small electric pump (1), a liquids collection tank (2), a liquids discharge siphon (3), a small lubricant oil container (4), cooling coil (5) for oil/air and some other ancillary components.

A description of the present invention follows, with reference to the drawings attached.

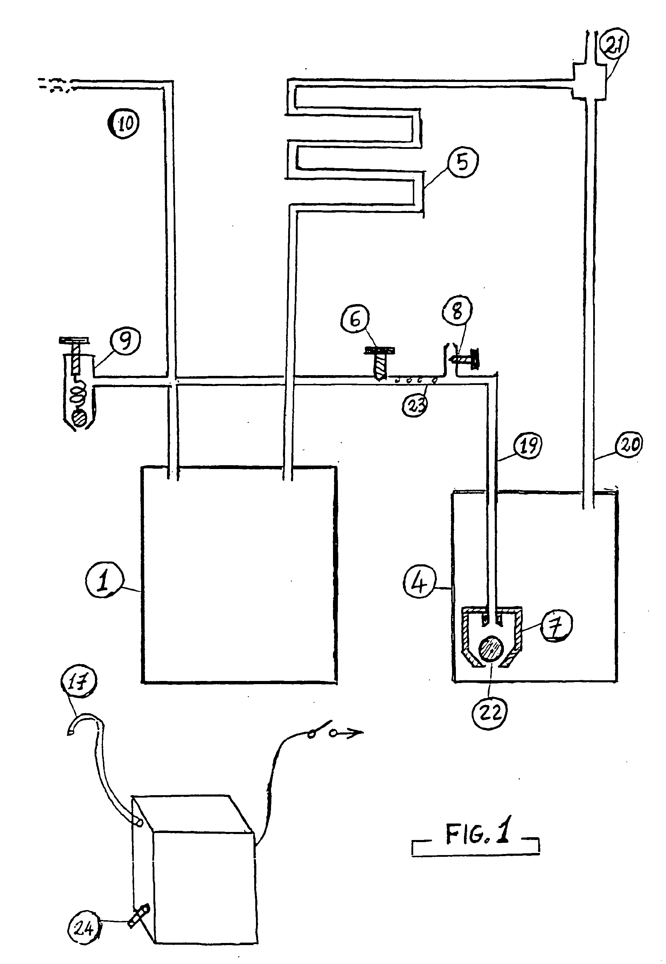

Figure 1 shows the connection of the electric pump (1) with the lubricant oil container (4), the cooling coil (5), the oil flow control valve (6), the oil flow limiter valve (7), the oil flow visual inspection valve (8), the suction limiter valve (9) and the air intake pipe (10).

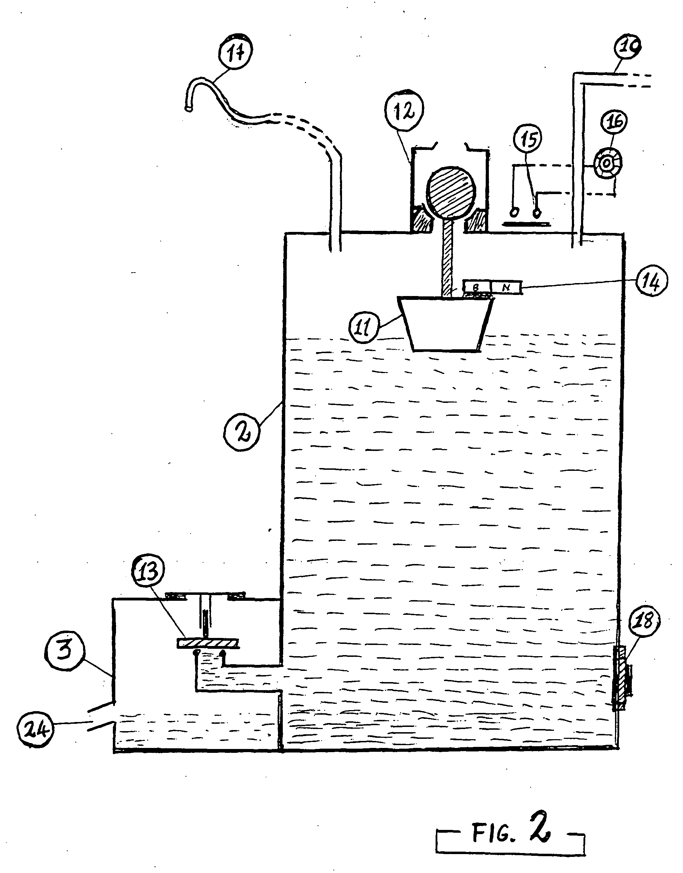

Figure 2 shows the liquids collection tank (2), the liquids discharge siphon (3), the floater (11) with the liquids level valve (12), the liquids output valve (13), the magnet (14) with the magnetic contacts (15), the buzzer (16), the suction hose tip (17), the cleaning cap (18) and the air intake pipe (10) from the pump (1).

A description of the operation of the present invention follows:

The vacuum created by the pump (1) aspirates the liquids from the patient's mouth along with air, through the air intake pipe (10), and drives them into the liquids collection tank (2) and through the liquids discharge siphon (3) to the drainage. The oil (19) in-taken from the container (4), is inserted into the pump (1) along with air from the air intake pipe (10), lubricating and cooling the pump, and then is returned to the container (4) through the coil (5) where it is cooled to ambient temperature, preventing the creation and release of odours to the environment.

The oil flow limiter valve (7), inside the oil container (4), regulates the oil flow by means of the small ball (22), depending on the existing suction power. The oil flow visual inspection valve (8) creates small air bubbles in the oil flowing through the transparent pipe (23), making the oil flow easily observable.

The suction limiter valve (9) regulates the vacuum created by the pump (1), in order to sustain the intake rate from the patient's mouth and keeping it from reaching excess, not comfortable, levels.

The liquids collection tank (2) has the following operation:

The vacuum created by the pump (1) inside the tank, is keeping the liquids output valve (13), at the discharge siphon (3), closed, until the liquids level in the tank reaches a specific point where their hydrostatic pressure equalizes the vacuum closing force and the output valve (13) finally opens, releasing the liquids from the siphon (3) to the drainage (24). The valve (13) opens also if the floater (11) in the tank is raised, by the liquids, to a certain level and then, the liquids level valve (12) opens momentarily, the vacuum level in the tank is decreased and the liquids are finally discharged to the drainage. In such case, a short duration sound is created by the buzzer (16), which is activated from the magnetic contacts (15), in the proximity of the floater's magnet (14). The liquids are also released to the drainage by turning off the devise. Cleaning the tank is easily carried out, through the cleaning cap (18).

Production of the said devise is easily accomplished by the use of standard commercial components.

## Claims

1. Dental saliva ejection pump comprising a small electric pump (1), a liquids collection tank (2), a liquids discharge siphon (3), a lubricant oil container (4), cooling coil (5) for oil/air, oil flow control valve (6), oil flow limiter valve (7), oil flow visual inspection valve (8), liquids level valve (12), and liquids output valve (13).

2. Dental saliva ejection pump, as recited in claim 1, which includes a tank (2) where the liquids are collected by means of the vacuum created by the electric pump (1) and depending on the liquids level and the vacuum level inside the tank (2), the output valve (13), located in the siphon (3), opens, releasing the liquids to the drainage.

3. Dental saliva ejection pump, as recited in claim 2, which is **characterized by** the fact that the tank (2) is protected from liquids overflow by means of the floater (11) and the liquids level valve (12), and, the electric pump (1) is protected from overheating, through lubricant oil circulation, contained in the oil container (4), which is cooled by passing through the cooling coil (5), while its flow is controlled by the oil flow limiter valve (7) and the oil flow visual inspection valve (8).
